# EUROPEAN PATENT SPECIFICATION

(11) **EP 1 343 627 B1**
(45) Date of publication and mention of the grant of the patent: **10.10.2007**
(21) Application number: 00991837.6
(22) Date of filing: 22.12.2000
(51) Int. Cl.: B29C 51/14, B29C 51/08, B29C 51/10

(54) **A COMPOSITE METAL PLASTIC SHEET THERMOFORMING METHOD**
VERFAHREN ZUM WARMFORMEN VON METALLKUNSTSTOFFFOLIEN
PROCEDE DE THERMOFORMAGE D'UNE FEUILLE METALLOPLASTIQUE COMPOSITE

(43) Date of publication of application: 17.09.2003
(73) Proprietor: Arçelik A.S., 81719 Istanbul (TR)
(72) Inventor: ÜREYEN, Refik, 81719 Istanbul (TR); ÖZKADI, Fatih, 81791 Istanbul (TR); KÜ¬ÜKPINAR, Esra, 81719 IStanbul (TR)
(86) International application number: PCT/TR2000/000065
(87) International publication number: WO 2002/051621

(56) References cited:
- EP-A- 0 029 152
- US-A- 3 340 714
- US-A- 4 559 257
- US-A- 5 199 595
- US-A- 5 635 129
- PATENT ABSTRACTS OF JAPAN vol. 004, no. 176 (M-045), 5 December 1980 (1980-12-05) & JP 55 124635 A (KINUGAWA RUBBER IND CO LTD), 25 September 1980 (1980-09-25)

## Description

### FIELD OF INVENTION

The present invention is related to a method for producing a composite sheet having a certain form made of plastic and metal layers

### BACKGROUND OF THE INVENTION

It is very difficult to shape a composite sheet comprising one or more than one layers of plastic material and one or more than one layers of metal. The main difficulty is to thermoform the composite sheet. Since plastic and metal have different material characteristics, they show different behaviours under thermal and physical effects.

In WO 00060292, a heat insulating wall comprising an evacuated space which is filled with a heat insulation material that can be evacuated, and which, to the greatest possible extent, is surrounded by an outer lining and an inner lining in an at least nearly vacuum-tight manner is described. According to the invention, the inner and/or outer lining is/are made of a thermoplastic synthetic material provided with means for reducing water vapor permeability and gas permeability to the greatest possible extent. In this application a sandwich structure is described but production method is not defined.

### OBJECT OF INVENTION

The objective of this invention is to produce a formed composite material made of plastic and metal layers.

### DRAWINGS OF THE PREFERRED EMBODIMENT

The composite sheet forming method, which is realised in order to attain the said object of the invention is illustrated in the attached drawings, wherein;

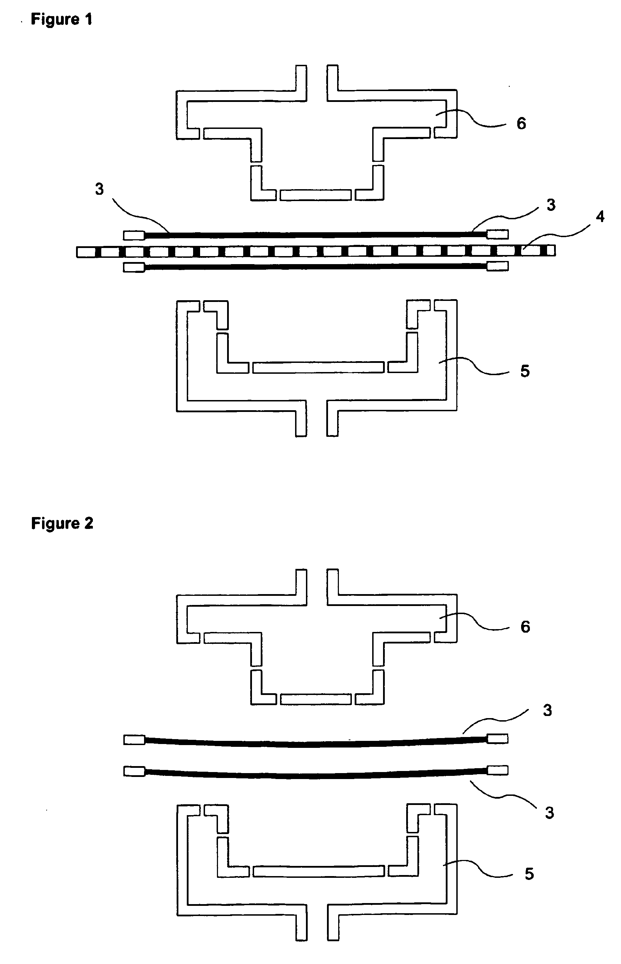

Figure 1, is the schematic view while the plastic layers are being heated.
Figure 2, is the schematic view while plastic layers are forced into the mold.
Figure 3a, is the schematic top view of the film material that contains both an aluminium layer and plastic layers.
Figure 3b, is another schematic top view of the film material that contains both an aluminium layer and plastic layers.
Figure 3c, is another schematic top view of the film material that contains both an aluminium layer and plastic layers.
Figure 3d, is another schematic top view of the film material that contains both an aluminium layer and plastic layers.
Figure 4, is the schematic view before the film material is inserted onto one of the molds.

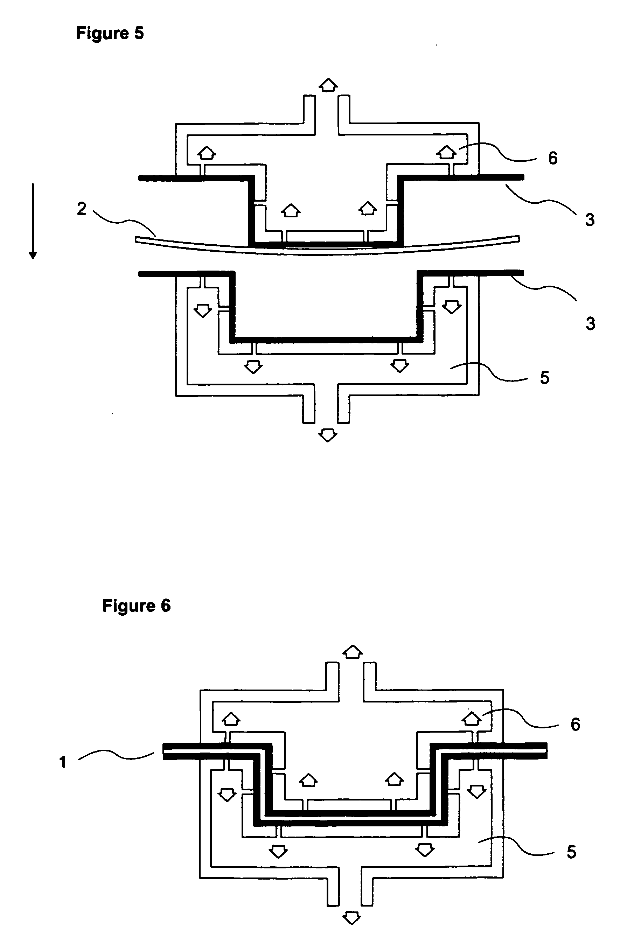

Figure 5, is the schematic view while one of the molds forces and pushes the aluminium layer towards the other mold.
Figure 6, is the schematic view when layers are combined to each other.

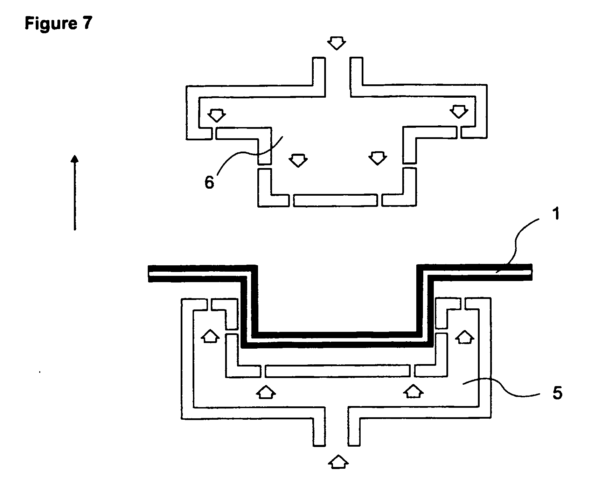

Figure 7, is the schematic view while the parts are being separated from the molds.

The components shown in the drawings have the following numbers;
1. Composite sheet
2. Film material
3. Plastic sheet
4. Heater
5. Lower mold
6. Upper mold

### DESCRIPTION OF THE PREFERRED EMBODIMENTS

The said composite sheet (1) consists of one or more than one plastic sheets (3) and one or more than one film material (2). The said film material (2) is a kind of a multilayer structure that contains metal and plastic layers.

In the preferred embodiment, the composite sheet (1) is made of two plastic sheets (3) and a film material (2) between them. The film material (2) contains a thin layer of plastic at upper side, a thin layer of metal in the middle and a thin plastic layer at the lower side.

Preferably, plastic sheets (3) and the film material (2) on both sides of which thin polyolefin layers are used. The polyolefin layers that covers both sides of the aluminium layer are able to adhere on the plastic sheets (3), when the plastics are still relatively soft and slightly warm.

For the production of the composite sheet (1), a thermoforming machine, preferably a twin-sheet thermoforming machine is used. The said thermoforming machine has a lower mold (5), an upper mold (6), and one or more than one heater (4). Lower (5) and upper molds (6) have vacuum units and heat exchangers inside their body. Preferably the upper mold (6) is male and the lower mold (5) is female.

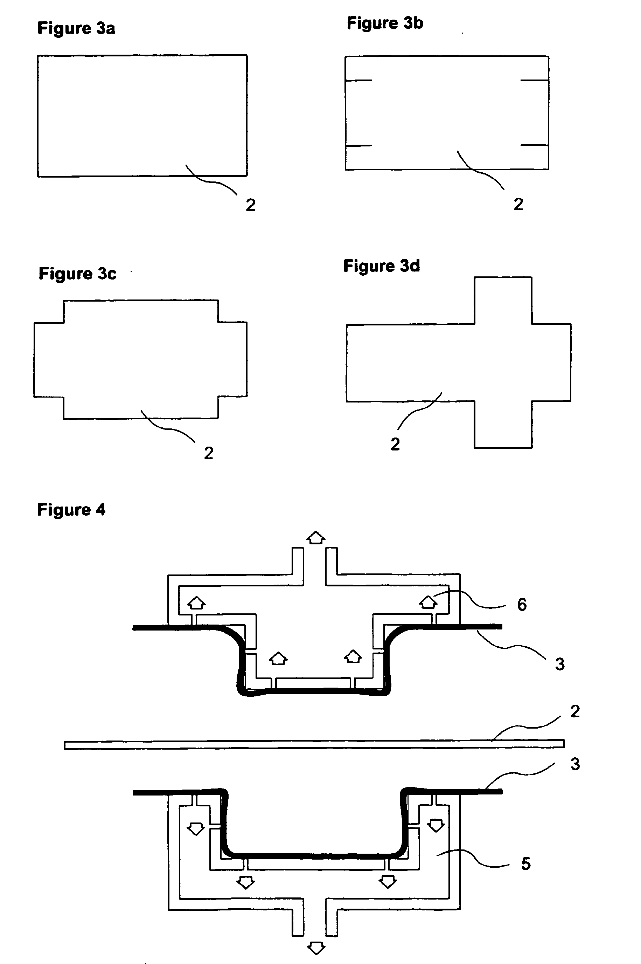

Before thermoforming, the film material (2) has to be cut such to fit onto the upper (6) and lower (5) molds. For instance a rectangular prism type composite sheet (1) must have a cross shaped film material (2) (Fig 3c). In another application some parts of the film material (2) can be folded during the process in order to fit the molds (Fig 3b). In the case of complex shapes, the film layer should have suitable sections. (Fig 3d).

The upper (6) and lower (5) molds are heated up to the process temperature by the heat exchangers inside them. Two plastic sheets (3) are placed over the heaters (4) of the twin sheet thermoforming machine between the upper mold (6) and the lower mold (5). Plastic sheets (3) are heated until they are ready for the forming process and then the heaters (4) are removed. After removing the heaters (4), vacuum is applied inside the upper (6) and lower (5) molds for forming the plastic sheets (3). While forming the plastic sheets (3), the film material (2) is inserted between the upper (6) and lower (5) molds. One of the molds preferably the upper mold (6) moves towards the film material (2) and the lower mold (5). By this way the film material (2) takes the shape of the upper (6) and lower (5) molds and is inserted in between the two plastic sheets (3). Then the upper (6) and lower (5) molds are separated from each other and the composite sheet which has a sandwich structure is removed.

Once the formed composite sheet (1) is produced, it (1) can be combined with others in different combinations by some welding or joining processes to form a desired structure having certain shapes.

## Claims

1. A method for forming a composite sheet (1) including one or more than one layers of plastic sheets (3) and one or more than one layers of film material (2) that contains metal and plastic layers, by means of a thermoforming machine having one or more than one heater (4), a lower mold (5) and an upper mold (6) the method comprising the steps of
- heating the molds (5,6) up to the process temperature,
- placing the plastic sheets (3) over the heaters (4) between the molds (5,6),
- heating the plastic sheets (3) until they are ready for the forming process,
- removing the heaters (4),
- applying vacuum inside the molds (5,6) for shaping the plastic sheets (3),
- cutting the film material (2) according to the requested shape,
- inserting the cut film material (2) between the plastic sheets (3),
- forming the film material (2) to the shape of the molds (5,6) by moving one of the mold toward the other
- separating the molds (5,6) and
- removing the obtained composite sheet (1) from the molds.

## Patentansprüche

1. Eine Methode für die Bildung einer Verbundplatte (1) einschließend eine oder mehrere Schichten von plastischen Platten (3) und eine oder mehrere Schichten vom Filmmaterial (2), das metallische und plastische Schichten beinhaltet, mittels eine Warmformanlage, die einen oder mehrere Heizer (4), eine untere Preßform (5) und eine obere Preßform (6) besitzt; und die Methode besteht aus folgenden Schritten:
- Preßformen (5, 6) bis Prozeßtemperatur erwärmen,
- die plastische Platten (3) über die Heizer (4) zwischen Preßformen (5, 6) legen,
- plastische Platten (3) erwärmen, bis sie zum Verformungsprozeß bereit sind,
- Heizer (4), durch Anwenden von Vakuum innerhalb Preßformen (5, 6), zur Verformung der plastischen Platten (3), entfernen,
- Filmmaterial (2) gemäß gewünschter Form schneiden, indem das geschnittene Filmmaterial (2) zwischen plastische Platten (3) eingesetzt wird,
- Filmmaterial (2) zur Form der Preßformen (5, 6) verformen, wobei eine der Preßformen zur anderen Preßform bewegt wird,
- Die Preßformen (5, 6) trennen und
- Die erhaltene Verbundplatte (1) von den Preßformen entfernen.

## Revendications

1. Méthode pour former une feuille composée (1) incluant un ou plusieurs films en feuilles plastiques (3) et un ou plusieurs films en matériaux de film (2) contenant des films métaux et plastiques, assurée à l'aide d'une machine à thermoformage ayant un ou plusieurs radiateurs (4), un moule inférieur (5) et un moule supérieur (6), et comprenant les étapes suivantes :
- chauffage des moules (5, 6) jusqu'à la température du processus,
- placement des feuilles plastiques (3) sur les radiateurs (4) entre les moules (5, 6),
- chauffage des feuilles plastiques (3) jusqu'à ce qu'elles soient prêtes au processus de formage,
- enlèvement des radiateurs (4),
- application du vacuum à l'intérieur des moules (5, 6) pour le formage des feuilles plastiques (3),
- coupage des matériaux de film (2) selon la forme souhaitée,
- insertion du matériau de film (2) coupé entre les feuilles plastiques (3),
- formage du matériau de film (2) selon la forme des moules (5, 6) en déplaçant l'un des moules vers l'autre,
- séparation des moules (5, 6), et
- enlèvement de la feuille composée (1) des moules.
